# EUROPÄISCHE PATENTSCHRIFT

(11) **EP 1 274 159 B1**
(45) Veröffentlichungstag und Bekanntmachung des Hinweises auf die Patenterteilung: **10.02.2010**
(21) Anmeldenummer: 02014151.1
(22) Anmeldetag: 25.06.2002
(51) Int. Cl.: H02G 3/34

(54) **Mehrteilige Befestigungskonsole für Installationskanäle**
Multiple part fastening bracket for installation ducts
Support de fixation en plusieurs pièces pour conduites d' installation

(30) Priorität: 03.07.2001 DE 20110986 U
(43) Veröffentlichungstag der Anmeldung: 08.01.2003
(73) Patentinhaber: REHAU AG + Co, 95111 Rehau (DE)
(72) Erfinder: Kunze, Werner, Rehau AG + Co, 95111 Rehau (DE); Zielke, Peter, Rehau AG + Co, 95111 Rehau (DE)

(56) Entgegenhaltungen:
- EP-A- 0 277 344
- EP-A- 0 593 858
- DE-U- 29 908 606
- GB-A- 981 377

## Beschreibung

Die Erfindung betrifft eine mehrteilige Befestigungskonsole für Installationskanäle, wie Brüstungs- oder Fensterbankkanäle, an einer Wand oder dergleichen, bestehend aus zwei plattenförmigen Grundkörpern, deren gegenseitige Lage unter Benutzung von Verstelleinrichtungen veränderbar ist, und die einerseits einen an einer Wand anzubringenden Befestigungswinkel und andererseits einen Anschlusswinkel für die Anbringung eines Installationskanals aufweisen.

Diese Befestigungskonsolen werden benötigt, wenn Installationskanäle mit einem vorbestimmten Abstand zur Wand montiert werden sollen. Dies ist der Fall, wenn unter dem Installationskanal ein Heizungskörper angeordnet ist. Durch den entsprechenden Abstand ist gewährleistet, dass die warme Luft eines Heizkörpers ungehindert zirkulieren kann.
Zur Montage der Konsolen werden zuerst die Positionen der Konsolen an der Wand festgelegt. Nach dem Bohren der entsprechenden Löcher werden die jeweiligen Konsolen mittels Dübel und Schrauben angebracht. Anschließend werden am Boden der Kanäle die entsprechenden Stellen für die Befestigungsbohrungen festgelegt und die Bohrungen hergestellt. Nunmehr erfolgt das Anschrauben der Kanäle an die Konsolen, indem entsprechende Schrauben in die im kanalseitigen Konsolenteil angebrachten Muttern eingebracht werden. Um eine Feinjustierung zu ermöglichen, sind die Muttern in engen Grenzen in Langlöchern verschiebbar angeordnet.
Neben der zeitaufwendigen Montage sind zum Befestigen der Kanäle mindestens zwei Installateure erforderlich.

Aus dem DE 299 08 606 U1 ist eine Konsole zur Befestigung von Leitungsführungskanälen bekannt, der im wesentlichen ein wandseitiges und ein kanalseitiges Konsolenteil, ein oberes und ein unteres Langloch und den Langlöchern zugeordneten, seitlich verschiebbaren Halteteilen umfasst, wobei das kanalseitige Konsolenteil eine hochstehende Leiste besitzt und in die Leiste ein oberes Langloch eingearbeitet ist.

Das dem oberen Langloch zugeordnete Halteteil besitzt einen Haken, der mit der Lochung im Boden des Leitungskanals korrespondiert. Nachdem die Konsolen an der Wand befestigt sind, kann der Leitungskanal zunächst auf die Haken des oberen Halteteils gehängt werden. Anschließend können die Kanäle seitlich justiert werden, die unteren Halteteile so weit verschoben werden, dass sie mit der Bodenlochung fluchten und die Halteschrauben eingedreht werden.
Eine Einmannmontage ist somit möglich.

Die EP 0 593 858 A1 beschreibt eine mehrteilige Befestigungskonsole aus einem winkelförmigen, sich überlappenden und im Bereich der Überlappung aufeinander verschieblich und feststellbar gestalteten vorderen und hinteren Teilbereich, wobei in den Abwinkelungen Langlöcher zur Höhenanpassung der Konsole an der Gebäudewand einerseits und zur Lagefixierung des Installationskanals an der Konsole eingebracht sind. Die kanalseitige Abwinkelung des kanalseitigen Winkels weist in ihrem oberen und unteren Randbereichen in Winkelrichtung axial verlaufende Langlöcher auf, die mit entsprechenden Langlöchern am Boden des Installationskanals fluchten, wodurch der Kanal in horizontaler Richtung ausrichtbar wird.

Aus der EP 0 277 344 B1 sind Anbaukanäle für Leitungen bekannt, die einen wandseitigen Abstandshalter zur Festlegung der Kanäle an Gebäudewänden benötigen. Der dort beschriebene Abstandshalter ist zweiteilig ausgebildet und besitzt einen Wandbefestigungsbereich sowie einen zweiten Befestigungsbereich zum Verbinden der Unterseite des Kabelkanals. Diese Befestigungsbereiche stellen zwei voneinander unabhängige Einzelteile des Befestigungssystems dar und sind axial verschieblich aufeinander angeordnet. Im Bereich dieser Verschieblichkeit sind sich überlappende Langlöcher in die Grundkörper beider Befestigungsbereiche eingebracht, durch die beispielsweise eine Schraube als Feststellmittel greift. Die beiden axial gegeneinander im Bereich der sich überlappenden Langlöcher aufeinander verschieblichen Befestigungsbereiche gestatten eine Tiefeneinstellung des Kabelkanals von der Wand in Richtung der Y-Achse des Koordinatensystems.
Der kanalseitige Befestigungsbereich des bekannten Standes der Technik kann in seinem Flanschbereich zum Kanal hin ebenfalls Langlöcher aufweisen, die mit den Langlöchern im Kanalboden korrespondieren. Auf diese Weise kann der Kanal durch eine horizontale Bewegung in der X-Achse des Koordinatensystems zusätzlich ausgerichtet werden. Es sind also durch Verschiebungen von Konsolenteilen und des Kanals selbst Anpassungsbewegungen in der X-, Y- und Z-Achse des Koordinatensystems möglich.

Die vorgenannten Lösungen haben den Nachteil, dass bei Verwendung von gekürzten Kabelkanälen der Abstand benachbarter Bodenlochungen nicht mehr dem vorgegebenen Maß entspricht, wodurch diese Unterschiede durch die an den Konsolen angeordneten Langlöchern auch nicht mehr ausgeglichen werden können, so dass entweder neue Bodenlöcher gebohrt werden müssen oder die Konsole versetzt werden muss.

Die vorbekannten Befestigungssysteme haben nur Langlöcher mit einem relativ eng begrenzten Bereich zum Verschieben der Befestigungsmittel. Als Befestigungsmittel werden überwiegend Schrauben und Muttern verwendet, was bei engen Spaltmaßen zwischen Wand und Kanal zu Problemen bei der Montage führen kann.

Die Aufgabe der Erfindung besteht nunmehr darin, hier Abhilfe zu schaffen, insbesondere soll der Arbeits- und Zeitaufwand bei der Montage erheblich verringert werden. Weiterhin sollen die Befestigungskonsolen der eingangs genannten Art weiter verbessert werden, insbesondere sollen sie eine Befestigung ermöglichen, wenn der vorgegebene Abstand der werksseitig eingebrachten Bodenlöcher durch Kürzen der Kanäle unter- bzw. überschritten wird.

Erfindungsgemäß wird die gestellte Aufgabe durch die Merkmale des Anspruchs 1 gelöst.

Die Breite der Abkröpfung und somit die Länge der Langlochführung ist größer ausgeführt als der werksseitig vorgegebene Bodenlochabstand. Die Langlochführung kann auch mäanderförmig ausgebildet sein.

Anhand Zeichnungen soll die Erfindung in Form eines Ausführungsbeispiels näher erläutert werden. Es zeigen
Figur 1 - eine perspektivische Ansicht der Befestigungskonsole
Figur 2 - Ausschnitt aus dem Bodenbereich des Installationskanals
Figur 3 - Befestigungsbereich für den Installationskanal
Figur 4 - Befestigungsbereich für den Installationskanal

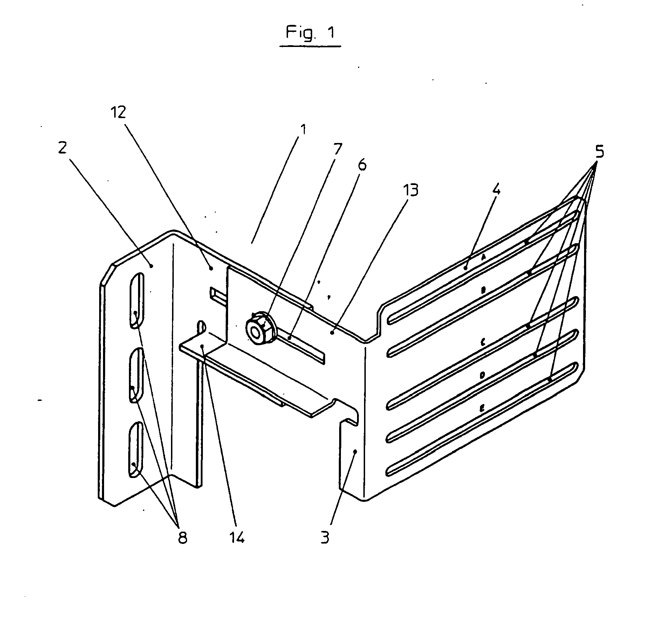

In der Fig. 1 ist schematisch die neuerungsgemäße Befestigungskonsole 1 in einer perspektivischen Ansicht dargestellt. Die Befestigungskonsole 1 besteht aus dem Wandwinkel 2 und dem kanalseitigen Winkel 3 mit der plattenförmigen Abkröpfung 4. Wandwinkel 2 und kanalseitiger Winkel 3 sind über einen Stegbereich 12 miteinander verbunden. Der Stegbereich 12 und der zugeordnete Teilbereich 13 des kanalseitigen Winkels 3 sind aufeinander verschiebbar angeordnet. Zur Erleichterung der Verschiebemöglichkeit und zur Halterung aufeinander können die Randbereiche 14 entsprechend abgekröpft sein, so dass die Randbereiche 14 den Teilbereich 13 des kanalseitigen Winkels 3 umgreifen. Im Stegbereich 12 ist eine axial verlaufende Langlochöffnung 6 ausgespart, die mit einer ebenfalls axial ausgerichteten Langlochöffnung im Teilbereich 13 fluchtet. Die Verbindung erfolgt durch eine in den Langlochöffnungen 6 angeordneten Verschraubung 7, wodurch der Abstand zwischen Wand und Installationskanal in seiner Länge einstellbar ist.

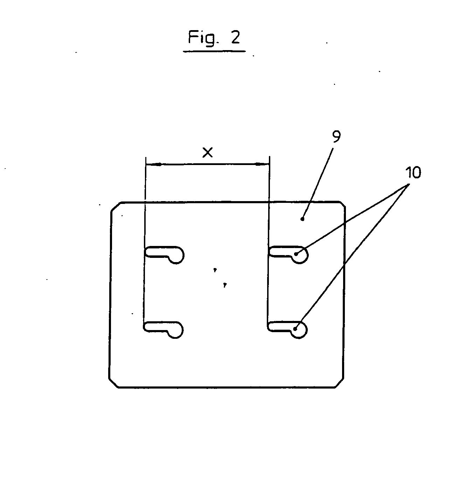

Mittels der Langlöcher 8 kann der Wandwinkel 2 an der Wand befestigt werden. Die Langlöcher 8 erlauben einen gewissen Höhenausgleich.
Am kanalseitigen Winkel 3 sind in der plattenförmigen Abkröpfung 4 axial verlaufende Langlöcher 5, welche mit entsprechenden Langlöchern im Bodenbereich des Installationskanals 9 fluchten, angeordnet. Auf diese Weise kann der Installationskanal 9 in der horizontalen Bewegung, d.h. in der X-Achse des Koordinatensystems entsprechend ausgerichtet werden. Die Länge ist so ausgeführt, dass diese länger sind als der Abstand X der Bodenlöcher 10 untereinander im Installationskanal 9. Die Bodenlöcher 10 im Installationskanal 9 sind als Schlüssellöcher ausgebildet (Fig. 2).

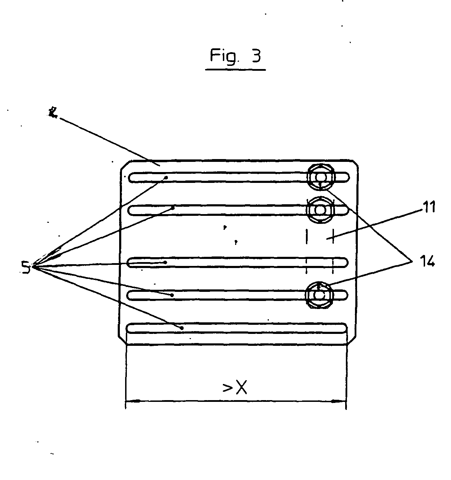

In der Fig. 3 ist die plattenförmige Abkröpfung 4 dargestellt. Diese weist beispielsweise fünf Langlöcher 5 auf. Auf der Rückseite der Abkröpfung 4 ist eine Befestigungsplatte 11 vorgesehen. Diese weist eine der Anzahl der Langlöcher entsprechende Gewindebohrungen auf. Je nach Höhe des anzubringenden Installationskanals 9 werden Schrauben 14 eingedreht, deren Schraubenköpfe auf der Vorderseite der Abkröpfung 4 überstehen. Der Installationskanal 9 kann nun mittels seiner Bodenlochungen 10, die eine Schlüssellochform aufweisen, aufgesteckt werden.

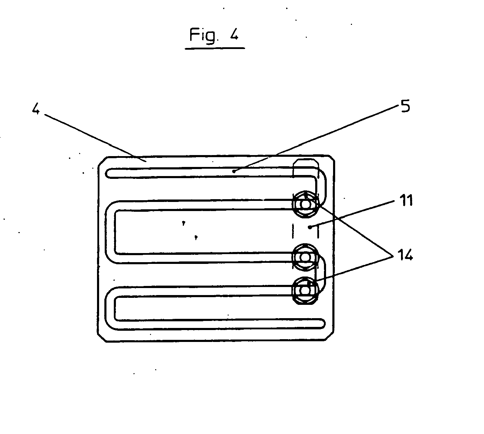

In der Fig. 4 ist die Langlochführung 5 mäanderförmig ausgebildet.

Die auf der Rückseite angeordnete Befestigungsplatte 11 wird mittels eingedrehter Schrauben 14 gehalten. Eine Höhenverschiebung der Befestigungsplatte 11 kann ohne Lösen der Schrauben 14 erfolgen, indem die Befestigungsplatte 11 mit den eingedrehten Schrauben 14 über die bogenförmigen Endbereiche des Mäanders geführt wird.

Die Montage der Befestigungskonsolen 1 bzw. des Installationskanals 9 erfolgt derart, dass zuerst der Abstand der Befestigungskonsolen 1 zueinander festgelegt wird und die entsprechenden Bohrungen an der Wand ausgeführt werden. Nachdem die Befestigungskonsolen 1 mit ihren Wandwinkeln 2 mittels Dübel und Schrauben befestigt und ausgerichtet sind, kann die Montage des fnstallationskanals 9 erfolgen. Am kanalseitigen Winkel 3 wird die Befestigungsplatte 11 auf der Rückseite der Abkröpfung 4 angehalten und mittels Schrauben 14 durch die axial verlaufenden. Langlöcher 5 fixiert und zwar derart, dass die Schraubenköpfe auf der Vorderseite der Abkröpfung 4 überstehen. Der Installationskanal 9 kann nunmehr mittels seiner im Bodenbereich werksseitig in Form von Schlüssellochbohrungen angebrachten Bodenlochungen 10 aufgesteckt werden und in Längsrichtung ausgerichtet werden. Anschließend können die Schrauben festgezogen werden.
Durch die Länge der Langlöcher 5, die größer als der Abstand X der werksseitig eingebrachten Bodenlochungen 10 ist, kann auch eine entsprechende Befestigung des Installationskanal 9 erfolgen, wenn dieser gekürzt wird und somit der Abstand X der benachbarten Bodenlochungen 10 nicht mehr dem vorgegebenen Abstand entspricht.

### Bezugszeichen

- 1 -: Befestigungskonsole
- 2 -: Wandwinkel
- 3 -: kanalseitiger Winkel
- 4 -: Abkröpfung
- 5 -: Langlöcher
- 6 -: Langloch
- 7 -: Schraubverbindung
- 8 -: Langloch
- 9 -: Installationskanal
- 10 -: Bodenlochung
- 11 -: Befestigungsplatte
- 12 -: Stegbereich
- 13 -: Teilbereich des kanalseitigen Winkels
- 14 -: Schrauben

## Patentansprüche

1. Mehrteilige Befestigungskonsole (1) für Installationskanäle (9), wie Brüstungs- oder Fensterbankkanäle, an einer Wand oder dergleichen, bestehend aus zwei plattenförmigen Grundkörpern (12, 13), deren gegenseitige Lage unter Benutzung von Verstelleinrichtungen veränderbar ist, und die einerseits einen an einer Wand anzubringenden Befestigungswinkel (2) und andererseits einen Anschlusswinkel (3) für die Anbringung eines Installationskanals (9) aufweisen, wobei die plattenförmige Abkröpfung (4) zur Aufnahme des Installationskanals mit mindestens einer Langlochführung (5) nahezu über die gesamte Breite der Abkröpfung (4) versehen ist,
**dadurch gekennzeichnet, dass**
die plattenförmige Abkröpfung (4) eine Befestigungsplatte (11) mit der Anzahl der Langlochführung (5) entsprechenden Gewindebohrungen aufweist.

2. Mehrteilige Befestigungskonsole (1) nach Anspruch 1, **dadurch gekennzeichnet, dass** die Breite der plattenförmigen Abkröpfung (4) und somit die Länge der Langlochführung (5) größer ausgebildet ist als der Abstand X der benachbarten Bodenlochung (10) des Installationskanals.

3. Mehrteilige Befestigungskonsole (1) nach Anspruch 1, **dadurch gekennzeichnet, dass** die Langlochführung (5) mäanderförmig ausgebildet ist.

## Claims

1. Multipart fastening bracket (1) for installation trunking (9), such as dado trunking or window sill trunking, on a wall or the like, consisting of two plate-like basic bodies (12, 13), the mutual position of which can be changed using adjusting devices, and which have firstly a fastening angle (2) for mounting on a wall and secondly a connecting angle (3) for mounting an installation trunking (9), wherein, in order to receive the installation trunking, the plate-like angled portion (4) is provided virtually over its entire width with at least one slotted guide (5),
**characterized in that**
the plate-like angled portion (4) has a fastening plate (11) having the number of threaded bores appropriate for the slotted guide (5).

2. Multipart fastening bracket (1) according to Claim 1, **characterized in that** the width of the plate-like angled portion (4) and thus the length of the slotted guide (5) is designed to be greater than the spacing X of the adjacent base perforation (10) of the installation trunking.

3. Multipart fastening bracket (1) according to Claim 1, **characterized in that** the slotted guide (5) has a meandering design.

## Revendications

1. Console de fixation en plusieurs parties (1) pour des conduites d'installation (9), telles que des goulottes de paroi ou des goulottes de rebords de fenêtres, sur un mur ou similaire, constituée de deux corps de base en forme de plaque (12, 13), dont la position mutuelle peut être modifiée en utilisant des systèmes de réglage, et qui présentent d'une part un coin de fixation (2) pouvant être monté sur une paroi, et d'autre part un coin de raccordement (3) pour le montage d'une conduite d'installation (9), la partie coudée (4) en forme de plaque pour recevoir la conduite d'installation étant pourvue d'au moins un guidage en forme de trou oblong (5) pratiquement sur toute la largeur de la partie coudée (4),
**caractérisée en ce que**
la partie coudée (4) en forme de plaque présente une plaque de fixation (11) avec des alésages filetés correspondants au nombre de guidages en forme de trous oblongs (5).

2. Console de fixation en plusieurs parties (1) selon la revendication 1, **caractérisée en ce que** la largeur de la partie coudée (4) en forme de plaque et donc la longueur du guidage en forme de trou oblong (5) est plus grande que la distance X du perçage du fond (10) adjacent de la conduite d'installation.

3. Console de fixation en plusieurs parties (1) selon la revendication 1, **caractérisée en ce que** le guidage en forme de trou oblong (5) est réalisé en forme de méandres.
